(19) Europäisches Patentamt
European Patent Office
Office européen des brevets

(11) **EP 4 011 528 A1**

(12) **EUROPEAN PATENT APPLICATION**

(43) Date of publication:
**15.06.2022 Bulletin 2022/24**

(21) Application number: **20213849.1**

(22) Date of filing: **14.12.2020**

(51) International Patent Classification (IPC):
**B23B 25/06** (2006.01)  **B23B 29/02** (2006.01)
**B23Q 17/12** (2006.01)  **G05B 19/404** (2006.01)

(52) Cooperative Patent Classification (CPC):
**B23B 25/06; B23B 29/02; B23Q 17/12;**
**G05B 19/404;** G05B 2219/49169;
G05B 2219/49186

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **AB Sandvik Coromant
811 81 Sandviken (SE)**

(72) Inventor: **ÖSTLING, Dan
811 81 Sandviken (SE)**

(74) Representative: **Sandvik
Sandvik Intellectual Property AB
811 81 Sandviken (SE)**

(54) **CALIBRATION OF A CUTTING TOOL AND DETERMINATION OF DIAMETER DEVIATION OF A MACHINED HOLE**

(57)     The invention relates to a method for calibrating a cutting tool arranged to a turning machine for machining the inner surface of a hole in a workpiece of a material. One or more calibration operations are performed in which an inner surface of a calibration hole in the workpiece is machined in accordance with a target radius, whereas values of a first parameter and a second parameter dependent on tangential cutting force and radial cutting force, respectively, are determined. Then, the actual machined radius of the calibration hole is measured, and the difference between the target radius and the actual radius is associated to the first and second parameter values. By applying curve fitting to the resulting data points, a dependence between radius deviation and the first and second parameters is defined and used for identifying a first calibration coefficient indicative of how a tangential cutting force affects a radius of a hole machined in the material by the cutting tool arranged to the turning machine. Such calibration coefficient, together with determined first and second parameter values, may be used to estimate the radius deviation of a subsequently machined hole, making it possible to compensate for such deviation.

*Fig. 2*

EP 4 011 528 A1

**Description**

TECHNICAL FIELD

The invention relates to calibration of a cutting tool for metal cutting, a method for determining a deviation of a machined hole using the results of such calibration, and a method for compensating for such deviation.

BACKGROUND ART

In the field of metal cutting, and in particular internal turning or boring, a cutting tool may be used for machining the surface of a hole in a workpiece. The machining process is often controlled by a CNC machine tool, to which the cutting tool is arranged.

Due to deflection of the tool during machining, it is sometimes difficult to achieve a machined hole with a diameter that exactly corresponds to the desired diameter, e.g. a diameter according to a programmed position and movement, relative to the workpiece, of a CNC machine tool spindle to which the cutting tool is arranged. Instead, the resulting hole may have a smaller diameter than desired. Therefore, a common approach is to machine a hole using multiple machining operations with step-wise decreasing cutting depths (since smaller cutting depth results in less tool deflection) and measuring the diameter between the machining operations. This is a time-consuming and tedious process which requires much manual labor.

Attempts have also been made to compensate for tool deflection. EP3292930 discloses that tool deflection can be measured using strain gauges and accelerometers and that a diameter deviation can be estimated based on the measurements. This works well in many applications. However, in some applications for which a tight tolerance is required, such estimation may not be accurate enough to serve as basis for compensatory machining, and thus still require additional diameter measurements.

Hence, there is a need for processes that provide accurate determination of a deviation between a desired diameter and a machined diameter of a machined hole.

SUMMARY

It is an object of the present invention to mitigate the shortcomings of the prior art and to provide a method for calibrating a cutting tool, wherein the results of such calibration facilitates accurate estimations of a deviation between a target radius and an actually machined radius of a hole in a workpiece.

Thus, according to a first aspect, the invention relates to a method for calibrating a cutting tool arranged to a turning machine for machining the inner surface of a hole in a workpiece of a material. During machining, the workpiece is subjected to a radial cutting force and a tangential cutting force directed in a radial direction and a tangential direction, respectively, relative to the hole, resulting in radial deflection of the cutting tool in the radial direction and tangential deflection of the cutting tool in the tangential direction. According to the method, one or more calibration operations with respect to a workpiece of the material is performed, wherein each calibration operation comprises the steps of:

- machining an inner surface of a calibration hole in the workpiece in accordance with a target radius;
- determining a value of a first parameter that is dependent on the tangential cutting force and a value of a second parameter that is dependent on the radial cutting force occurring during the machining;
- after machining the inner surface of the calibration hole, measuring the actual radius thereof;
- determining a radius deviation as the difference between the target radius and the actual radius;
- defining a data point by associating the first and second parameter values to the radius deviation value.

Then, curve fitting is applied to the data point(s) obtained in the one or more calibration operations, such that a dependence between radius deviation and the first and second parameters is defined. From the dependence, a first calibration coefficient is determined that is indicative of how a tangential cutting force affects a radius of a hole machined in the material by the cutting tool arranged to the turning machine, wherein the first calibration coefficient corresponds to a proportionality constant defining a linear dependence between the first parameter and the radius deviation. The first calibration coefficient is then stored.

The first calibration coefficient will be specific to a certain combination of cutting tool and turning machine and workpiece material.

A "turning machine", as used herein, refers to any machine tool usable for turning, for example a CNC-lathe i.e. a computer- or computerized numerical control lathe, or any other CNC-machine suitable for turning such as a turning lathe, a multi task machine, a turn-mill machine, or a sliding head machine.

A "target radius", as used herein in contrast to an "actual radius", refers to the desired radius that is supposed to be the result of a machining operation, for example as programmed into a CNC machine control. The actual radius is the true radius resulting from a machining operation, measured for example by a bore gauge.

A difference between radial deflection of the tool and an identified deviation between target hole radius and actual hole radius indicates that the deviation is not caused solely by the radial deflection of the tool. The inventors have found that tangential cutting forces under some circumstances have a surprisingly large effect on the radius deviation of a machined hole. Hence, a calibration coefficient obtained according to the above, taking the tangential cutting forces into consideration, facilitates more accurate estimations of hole diameter deviations compared to estimations based only on radial cutting forces.

The amount of deflection of a cutting tool, either in the radial direction or in the tangential direction, should be understood as the displacement of the cutting tool's cutting edge (the part of the cutting tool that engages the workpiece and forms the machined surface) from the position it would have had without deflection.

The step of determining the values of the first and second parameters may involve measurements using one or more sensors. The sensors may be arranged to the cutting tool.

The first and second parameters may be cutting force, or any other parameter that depends on the cutting force. Cutting force may be measured directly or determined in any other way, for example via measured strain at the cutting tool. A relation between force and measured strain is easily found, for example by weight loading. Measured strain may also be used directly as parameter, such that, for example, the first calibration coefficient reflects a linear dependence between strain in the tangential direction and the radius deviation. As another example, deflection (measured directly or determined via other parameters measured during machining) may be used as parameter, such that the first calibration coefficient reflects a linear dependence between deflection in the tangential direction and the radius deviation.

Thus, the first calibration coefficient may be determined from a relationship between the radius deviation and the tangential cutting force, but the calibration coefficient could also be determined from a relationship between the radius deviation and strain or deflection in the tangential direction, or any other parameter that is influenced by, and depends on, the tangential cutting force.

Strain may be measured by strain gauges arranged to the cutting tool. If measuring deflection directly, various different sensors may be used, such as optical or magnetic sensors.

Any of the parameters measured, e.g. deflection, cutting force or strain, in the tangential and radial directions may be determined by directly measuring the parameters in the corresponding directions. Alternatively, any of these parameters may be determined based on measurements in other directions as long as the measurement signals can be resolved into components in the respective tangential and radial directions. Moreover, even if the parameters would be measured in directions that slightly deviates from the respective radial and tangential directions, the parameters are nonetheless dependent on the forces in the respective tangential and radial directions and could be employed as such for the purpose of the invention. Accordingly, the determination of the first and second parameters may be based on measurements in two different directions, but these directions do not necessarily have to be orthogonal or completely aligned with the respective tangential and radial directions.

As used herein, when referring to machining operations on a workpiece, a "hole" should be understood as a cavity with circular shape in any cross-section taken perpendicular to the extension of the hole, but not necessarily with constant diameter. In other words, the hole may be circular cylindrical or, for example, comprise multiple sections of different diameter.

The first calibration coefficient may be stored on a memory arranged at the cutting tool or the turning machine, or it may be stored on some other storage medium locally or remotely arranged with respect to the turning machine, for example on a server or other entity.

Other coefficients that may be required for the calibration method (depending on which parameters that are measured and considered in the process) may be retrieved from a memory or other storage medium, possibly the same memory that is used for storing the first calibration coefficient. Such other coefficients may for example define how force and/or deflection is related to measured strain.

The first calibration coefficient may be determined based on the results of one or more calibration operations. In general, if performing multiple calibration operations using different cutting data, for example different feed and/or cutting depth (thus resulting in different cutting forces), more data points are obtained that describe the relationship between the radius deviation and the first and second parameters, meaning that the curve fitting and the identified dependence between the radius deviation and the first and second parameters (and the calibration coefficient determined therefrom), will be more accurate. Determining the first calibration coefficient based on only one calibration operation, e.g. using a single data point of associated values of the first and second parameters and radius deviation, may require an assumption that the radius deviation is zero when the value of the first parameter is zero. However, if there is some kind of offset error of the turning machine in the radial direction, e.g. caused by an imperfect reference of the turning machine, such assumption will not be correct. In general, an accurate determination of the first calibration coefficient may require multiple calibration operations resulting in a plurality of associated parameter- and radius deviation values.

The first calibration coefficient is determined from the identified linear dependence between the first parameter and the radius deviation, i.e. as the proportionality constant defining such dependence. In other words, the slope of a regression line corresponding to an approximated linear dependence between the first parameter and the radius deviation may be identified as the first calibration coefficient.

The curve fitting algorithm may be, for example, a linear regression algorithm or polynomial regression algorithm, e.g. using a method of least squares. A linear fit to the data points obtained from the calibration operations may often be sufficient, such that the first calibration coefficient may be directly obtained as the proportionality constant defining the linear dependence between the first parameter and the radius deviation. It is also envisaged that the curve fitting may result in a polynomial of higher degree, and that further calibration coefficients, i.e. coefficients for the additional terms in the polynomial, may be determined and stored for subsequent estimation of radius deviation.

The step of associating the first and second parameter values to the radius deviation value may involve modeling the radius deviation as a linear combination of the first and second parameters. Then, the proportionality constants for the first and second parameter may be identified based on a plurality of data points by employing multiple linear regression as curve fitting algorithm. Hence, the first calibration coefficient may be directly determined from the result of the multiple linear regression as the proportionality constant for the first parameter. By using multiple linear regression, a proportionality constant defining a linear dependence between the second parameter and the radius deviation will also be determined. Such proportionality constant will be indicative of how a radial cutting force affects a radius of a hole machined in the material by the cutting tool arranged to the turning machine, and may be considered as a second calibration coefficient which may be used together with the first calibration coefficient in subsequent estimations of radius deviations of a machined hole.

If there is a machine offset error in the radial direction, manifested as an unknown constant in the linear combination, such error will also be identified using the multiple linear regression analysis.

As used herein, a difference between radial deflection of the tool and an identified deviation between target hole radius and actual hole radius is referred to as a "deflection-deviation difference".

According to some embodiments, the second parameter is the radial deflection of the cutting tool, and the step of associating the first and second parameter values to the radius deviation value comprises:

- determining a deflection-deviation difference value as the difference between the radial deflection of the cutting tool and the radius deviation value; and
- associating the deflection-deviation difference value to the value of the first parameter.

Thus, by applying the curve fitting algorithm, the deflection-deviation difference is modelled as a function of the first parameter, thereby defining the dependence between radius deviation and the first and second parameters. The first calibration coefficient will then correspond to an approximated linear rate of change of the first parameter with respect to deflection-deviation difference.

Using this method, a single variable (the first parameter) needs to be considered when applying the curve fitting algorithm, and the first calibration coefficient may therefore be easily obtained, for example by using simple linear regression.

The radial deflection may be directly measured. Alternatively, it may be determined from other parameters, such as, for example, strain or force measured at the cutting tool during machining. Such determination may be based on the results of a pre-calibration procedure in which the measurement signal has been related to a known deflection applied in the radial direction. Using such method may result in a more accurate determination of any potential machine offset error, compared to using multiple linear regression analysis.

Hence, the calibration method may further comprise the steps of:

- determining, from the dependence, a machine offset error as the deflection-deviation difference value when the value of the first parameter is zero; and
- storing the machine offset error.

The machine offset error may be stored separately or together with the first calibration coefficient, for example on a memory or on a locally- or remotely arranged computer or server.

As discussed previously, such machine offset error may also be determined using multiple linear regression.

Thus, a calibration method according to the invention may not only be used for determining a first calibration coefficient indicative of how a tangential cutting force affects a radius of a machined hole - it may also be used to determine a machine offset error in the radial direction, for example caused by an imperfect reference of the turning machine.

As an example, if illustrating the relationship between the first parameter and the deflection-deviation difference in a plot with the first parameter on the X-axis and the deflection-deviation difference on the Y-axis, and if applying a curve fitting algorithm to approximate a linear dependence between the deflection-deviation difference and the first parameter based on a single calibration operation, assuming that there is no machine offset error (i.e. assuming that the deflection-deviation difference is zero when the first parameter is zero), then the approximation would result in a regression line passing through the origin and a point defined by the deflection-deviation difference value and the associated first parameter value obtained from the calibration operation. The first calibration coefficient may then be determined as the slope of this regression line. However, if approximating the linear dependence based on a plurality of calibration operations, a linear fit of the resulting associated parameter- and deflection-deviation difference values would provide a regression line which not necessarily passes through the origin. In this case, the first calibration coefficient may still be determined as the slope of the regression line, whereas the machine offset error may be determined as the Y-intercept of the regression line, i.e. the value of the deflection-deviation difference when the value of the first parameter is zero.

A method for determining a machine offset error as discussed above does not actually require that the first calibration coefficient is determined, but could be performed independently. Hence, the present disclosure also encompasses a method for calibrating a turning machine, wherein, during machining of the inner surface of a hole in a workpiece of a material with a cutting tool arranged to the turning machine, the workpiece is subjected to a radial cutting force and a tangential cutting force directed in a radial direction and a tangential direction, respectively, relative to the hole, resulting in radial deflection of the cutting tool in the radial direction and tangential deflection of the cutting tool in the tangential direction, and wherein the method comprises:

- performing two or more calibration operations with respect to a workpiece of the material, wherein each calibration operation comprises the steps of:

  - machining an inner surface of a calibration hole in the workpiece in accordance with a target radius;
  - determining a value of a first parameter that is dependent on the tangential cutting force and a value of a second parameter that is dependent on the radial cutting force that occurred during the machining;
  - after machining the inner surface of the calibration hole, measuring the actual radius thereof;
  - determining a radius deviation as the difference between the target radius and the actual radius;
  - defining a data point by associating the first and second parameter values to the radius deviation value,

- applying a curve fitting algorithm to the data points obtained in the calibration operations, such that a dependence between radius deviation and the first and second parameters is defined,
- determining, from the dependence, a machine offset error indicative of an offset error in the radial direction, and
- storing the machine offset error

As discussed, the machine offset error may be determined as the radius deviation (or deflection-deviation difference) when the values of the first and second parameters are zero.

According to some embodiments, the calibration method further comprises the steps of:

- determining a second calibration coefficient for the cutting tool arranged to the turning machine for machining in the material by:

  - pressing the cutting tool in the radial direction against the surface of the workpiece for deflecting the cutting tool a known distance in the radial direction,
  - detecting radial strain in the radial direction, or a direction substantially corresponding to the radial direction, that is caused by the deflection,
  - determining the second calibration coefficient as the detected radial strain divided by the deflected distance; and

- storing the second calibration coefficient.

Such second calibration coefficient may be used for determining radial deflection of the cutting tool based on measured strain. The second calibration coefficient may be stored separately or together with the first calibration coefficient, for example on a memory, or on a locally- or remotely arranged computer or server.

The steps for determining the second calibration coefficient may be carried out before performing the one or more calibration operations, wherein, for each calibration operation, radial strain occurring during the machining is detected and the radial deflection of the cutting tool is determined as the ratio between the detected radial strain and the second calibration coefficient.

Thereby, the radial deflection of the cutting tool may be easily determined without requiring direct measurement of deflection.

The curve fitting may be based on the results of at least three calibration operations using different cutting data when machining an inner surface of a calibration hole in the workpiece. Thereby, the curve fitting and the first calibration coefficient determined therefrom may be accurately determined. As an example, a linear fit of at least three data points may result in a more accurate approximation of the linear dependence between the first parameter and the radius deviation compared to an approximation based on only one or two such data points.

According to some embodiments, the first parameter is tangential cutting force. Tangential cutting force may be determined based on measured strain in the tangential direction. The relation between force and measured strain for a specific tool setup is easily found, for example by weight loading. Hence, such relation may be determined in advance in a separate procedure, for example a procedure in which the cutting tool is subjected to a known force in the tangential direction and the resulting tangential strain is measured and a coefficient characterizing the relation is defined as the measured strain divided by the known force. Such coefficient may be stored on a memory or other storage medium from which it can be retrieved and used for determining tangential cutting force when performing the calibration method. The coefficient may be stored on the same memory or other storage medium that is used for storing the first calibration coefficient.

According to a second aspect, the invention relates to a method for estimating a deviation, from a desired radius, of a machined radius of a hole in a workpiece of a material, machined by a cutting tool arranged to a turning machine, wherein the method comprises:

- obtaining a first calibration coefficient for the cutting tool arranged to the turning machine for machining in the material, determined by a calibration method according to the first aspect of the invention, and, after or during machining the hole:
- determining a value of the same first parameter considered in the calibration method,
- determining a value of the same second parameter considered in the calibration method, and
- estimating the deviation as a linear combination of at least the first and the second parameter values using the first calibration coefficient as coefficient for the first parameter value.

Thereby, a radius deviation may be accurately estimated, alleviating the need for measuring the machined hole. The first and second parameters determined in the method for estimating a deviation correspond to the first and second parameters determined in the method for calibrating the cutting tool. Accordingly, the first parameter is dependent on the tangential cutting force directed in a tangential direction relative to the hole and the second parameter is dependent on the radial cutting force directed in a radial direction relative to the hole.

The estimation may be made locally, for example using a processor arranged at, or otherwise connected to, the turning machine. Alternatively, the estimation is made remotely, for example at a remotely located computer or server to which the parameter values, or any measurement signals that are used for calculating these, are transmitted.

The linear combination may also include a constant, corresponding to a machine offset error determined by the calibration method. Thereby, a machine offset error in the radial direction would be taken into consideration when determining the deviation. However, such machine offset error may be handled separately and taken into account by other means. For example, if determining a machine offset error by a method according to the first aspect of the invention, such error may be compensated elsewhere in the machine, for example by compensating a offset parameter in the machine. In that case, it might not be interesting to consider the machine offset error when estimating the deviation according to the second aspect of the invention, but to only include the terms that relate to the deflection of the cutting tool, i.e. the first and second parameters.

The method may comprise obtaining, in addition to the first calibration coefficient, a second calibration coefficient that may be used in the estimation of the deviation, for example in the calculation of the second parameter value or as coefficient for the second parameter value in the linear combination. For example, a second calibration coefficient that has been determined in a calibration method involving multiple linear regression may be employed in the linear combination as coefficient for the second parameter when estimating the deviation. The first and the second calibration coefficients may be retrieved from a memory or other storage medium on which the coefficients have been stored.

According to some embodiments relating to the second aspect of the invention, the second parameter is radial deflection of the cutting tool, and a second calibration coefficient for the cutting tool arranged to the turning machine for machining in the material determined by a calibration method according to the first aspect of the invention is obtained, wherein the step of determining the value of the second parameter comprises:

- detecting radial strain directed in a radial direction, or a direction substantially corresponding to a radial direction, relative to the hole, and
- determining the value of the second parameter as a ratio between the detected radial strain and the second calibration coefficient.

Thereby, the radial deflection of the cutting tool can be easily determined without requiring direct measurement of deflection. With this approach, the linear combination of the first and second parameters would correspond to the sum of the radial deflection determined in accordance with the above and the first parameter value multiplied with the first calibration coefficient.

The strain in the radial direction may be measured by one or more strain gauges arranged to the cutting tool.

As discussed, strain in the tangential direction may also be measured and used in the analysis. Hence, if the first parameter considered in the calibration was strain in the tangential direction, such measured strain may be used directly in the method for estimating the deviation. Otherwise, tangential force and/or deflection may be determined from the measured strain, as appropriate depending on which parameter that is considered. A relation between force and measured strain may be found in a pre-calibration procedure, e.g. by weight loading.

According to a third aspect, the invention relates to a method for compensating an estimated deviation in the radius of a hole machined in a workpiece of a material with a cutting tool arranged to a turning machine, wherein the method comprises:

- estimating a deviation, from a desired radius, of a machined radius of the hole by a method according to the second aspect of the invention,
- transmitting the estimated deviation to a control section of the turning machine,
- compensating the estimated deviation by offsetting, via the control section, the cutting tool along a radial direction relative to the hole, by a distance corresponding to the estimated deviation.

Thereby, a hole in a workpiece may be machined with high accuracy without requiring multiple machining operations with repeated measurements of the hole diameter. The compensation may be made in view of subsequently machined holes. That is, the estimated deviation when machining a first hole may be used as input to the machine control section when using the same cutting tool to machine a second hole in a workpiece of the same material. Alternatively, the compensation may be made in real-time based on measurements and feedback received during machining, such that the compensation is made with respect to the hole for which the deviation is estimated. Thereby, the deviation may be immediately cancelled during machining of the hole.

According to a fourth aspect, the invention relates to a cutting tool for use in a method according to the second aspect of the invention, wherein the cutting tool is arrangeable to a turning machine for machining a workpiece of a material, and comprises:

- a memory having stored thereon a first calibration coefficient for the cutting tool arranged to the turning machine for machining in the material, wherein the first calibration coefficient has been determined by a calibration method according to the first aspect of the invention.

A second calibration coefficient determined by a calibration method according to the first aspect of the invention, and used in the method according to the second aspect of the invention, may also be stored on the memory, as well as other information that may be required, for example a coefficient defining how measured tangential strain is related to tangential cutting force.

If such coefficients are stored on a memory arranged at the cutting tool, the coefficients are readily available for use in a method for estimating radius deviation according to the second aspect of the invention. As an alternative to storing the calibration coefficients on a memory arranged at the cutting tool, the coefficients may be stored in other locations, for example at a remotely located server from which the coefficients may be retrieved. Multiple different sets of calibration coefficients, relating to different combinations of cutting tool, turning machine and workpiece material, may be stored.

The cutting tool according to the fourth aspect of the invention may also comprise sensors for measuring the first and second parameters, or measurands that are used for determining the first and second parameters. For example, the cutting tool may comprise a first and a second strain gauge arranged to measure the strain in the respective tangential and radial directions.

According to a fifth aspect, the invention relates to a turning system comprising a turning machine including a control section, a cutting tool arranged to the turning machine, one or more sensors, a processor, and a storage medium having stored thereon a first calibration coefficient determined by the calibration method, and wherein the turning system is configured to perform the method for estimating a radius deviation and/or compensating for such deviation.

The processor and the storage medium may be integrated with or arranged in connection with the turning machine or the cutting tool. Alternatively, the processor and/or the storage medium is located in a computer or server remote from the turning machine, but communicatively coupled thereto, for example via a communication interface, such that, for example, control instructions to compensate for an estimated radius deviation can be sent to the control section of the turning machine, or calibration coefficients and sensor data used in the estimation of radius deviation can be received and transmitted.

The one or more sensors generate output that is used to determine calibration coefficients and to estimate a radius deviation. The sensors may be arranged to the cutting tool and may for example be strain gauges.

According to a sixth aspect, the invention relates to a computer program having instructions which when executed by the turning system causes the system to perform the method for estimating a radius deviation and/or compensating for such deviation. Thus, the methods described herein may be embodied by a computer program or a plurality of computer programs, which may exist in a variety of forms. For example, they may exist as software programs comprised of program instructions for performing some of the steps of the methods, and may be embodied on a computer readable medium.

BRIEF DESCRIPTION OF DRAWINGS

Fig. 1 is an isometric view of a cutting tool.

Fig. 2 schematically illustrates misalignment of a sensor in view of tangential and radial directions with respect to a machined hole.

Figs. 3 is an isometric view of a turning system.

Fig. 4 is a flowchart illustrating a method for calibrating a cutting tool.

Fig. 5 shows a dependence between the radius deviation and the first and second parameters used to determine the first calibration coefficient.

Fig. 6 is a flowchart illustrating a method for estimating radius deviation of a machined hole.

Fig. 7 is a flowchart illustrating a method for compensating for estimated radius deviation.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

DETAILED DESCRIPTION OF EMBODIMENTS

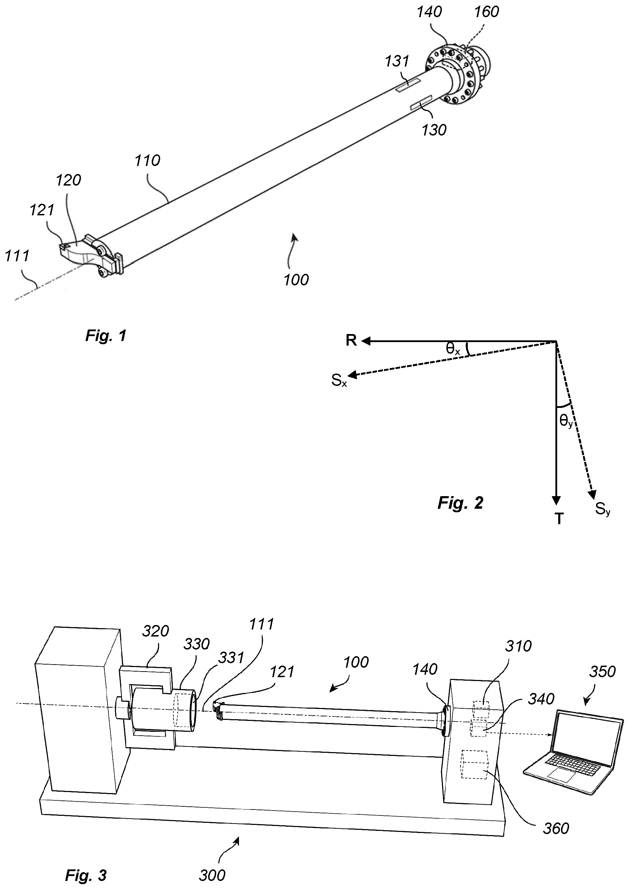

Fig. 1 is a perspective view of a cutting tool 100, according to an embodiment. The cutting tool 100 is a cutting tool adapted for the well-known machining process called turning. The cutting tool 100 comprises a tool bar 110 (which may also be referred to as a turning bar 110), a cutting head 120, and at least two sensors 130, 131 in the form of strain gauges, one arranged for measuring strain in the radial direction, and one for measuring strain in the tangential direction. The tool bar 110 extends along an axis 111. The cutting head 120 is located at the tool bar 110.

The tool bar 100 is an elongate element or elongate member. In the present embodiment, the tool bar 110 is a cylindrical element extending along the axis 111. The cutting head 120 is arranged or mounted at one end of the tool bar 110.

A machine interface 140 is arranged at the other end of the tool bar 110 for mounting the cutting tool 100 in a turning machine. An insert 121 is mounted at the cutting head 120. The insert 121 has one or more cutting edges for cutting away material (for example metal) from a work piece. The cutting tool 100 may be employed for internal turning wherein material from an internal surface of a work piece, e.g. within a hole of the work piece, is removed. Internal turning is sometimes also referred to as boring.

The cutting tool 100 also comprises a memory 160, schematically illustrated in fig. 1 as located at the machine interface 140. The memory may be located at other parts of the cutting tool, for example arranged to the tool bar 110.

Measurements from the strain gauges 130, 131, obtained during internal turning, may be used in a calibration method and/or in a method for estimating a radius deviation of a machined hole according to the present invention. Calibration coefficients, determined by such calibration method, may be stored on the memory 160.

The two strain gauges 130, 131 are preferably oriented such as to measure strain in the radial and tangential direction, respectively, with respect to a hole to be machined in a workpiece. However, if the strain gauges are oriented differently, for example if they are not perfectly aligned with the respective radial and tangential directions, the strain in the tangential and radial directions may be determined using simple trigonometry. For example, with reference to fig. 2, if the strain gauge 130 for measuring radial strain is misaligned such that a strain $S_x$ is measured in a direction that deviates from the radial direction R by an angle of $\theta_x$ and the strain gauge 131 for measuring tangential strain is misaligned such that a strain $S_y$ is measured in a direction that deviates from the tangential direction T by an angle of $\theta_y$, then the tangential strain St and radial strain $S_r$ may be given by:

$$S_t = S_y \cos \theta_y + S_x \sin \theta_x$$

$$S_r = S_x \cos \theta_x - S_y \sin \theta_y$$

However, even if the strain gauges are not perfectly aligned with the radial and tangential directions, as in the example illustrated in fig. 2, the strain signals $S_x$ and $S_y$ are nevertheless parameters that are dependent on the radial cutting force and tangential cutting force, respectively, and may be used as such when determining the first and second calibration coefficients. Thus, even if a calibration is based on such measurements, a subsequent estimation of radius deviation would be valid since the same misalignment of the strain gauges is present both when determining the calibration coefficients and when determining the parameter values used for estimating the radius deviation. Thus, according to some embodiments, the exact orientation of the strain gauges may not be crucial.

Fig. 3 is a perspective view of a turning system according to an embodiment, comprising a turning machine 300 and a cutting tool 100, for example a cutting tool as described with reference to Fig. 1. The turning system is adapted to perform a calibration method and/or to estimate the deviation of the radius of a machined hole and to compensate for such deviation using the results of the calibration method. The turning system may for example comprise a processor 310 configured to estimate the radius deviation using the output provided by the sensors 130, 131 and calibration coefficients determined by the calibration method. The processor 310 is illustrated as located in the turning machine 300 but may alternatively be located in the cutting tool 100 or in some other part of the turning system, i.e. remotely from the turning machine 300, for example at a remotely arranged computer. The signals from the sensors 130, 131 may be transmitted to the processor 310 wirelessly (for example via Bluetooth) or by wire.

The processor 310 may comprise one or more programmable processors, application-specific integrated circuits, field programmable gate arrays or combinations of these (not shown) adapted to execute instructions, and may for example be a general-purpose central processing unit (CPU), a specific purpose processor, or a microcontroller.

The turning machine 300 comprises a spindle 320 for rotating a work piece 330. The cutting tool 100 is mounted via the machine interface 140 such that it may be moved towards the work piece 330 for cutting away material from the work piece 330 as the work piece 330 rotates. In the present embodiment, the work piece 330 has a hole 331 in which the cutting tool 100 may cut away material for expanding the hole 331.

The turning machine 320 may comprise a communication interface 340 configured to transmit and receive signals, such as measurement signals from the sensors 130, 131, for example to/from the processor 310 and/or an external computer. Moreover, the signaling provided by the communication interface 340 may be provided via wired or wireless signals (for example via Bluetooth) to a remotely located device 350 having a user interface for indicating an estimated radius deviation to a human operator using the turning machine 300. The device 350 may for example be a personal computer or a hand held device such as a mobile phone or tablet computer.

The communication interface 340 may communicate with the processor 310 wirelessly or via a wired connection. In some embodiments, the processor 310 and/or the communication interface 340 may be located (or integrated) in the cutting tool 100.

The calibration coefficients may be retrievable by the processor 310 from a storage medium, such as the memory 160 arranged at the cutting tool. Alternatively, if the calibration coefficients are stored on a storage medium located elsewhere, locally or remotely with respect to the turning machine, the calibration coefficients may be retrievable therefrom, for example via the communication interface 340.

The storage medium may be any medium on which the calibration coefficients can be stored, for example a memory realized as a RAM (Random.access memory), ROM (Read-Only memory) or EEPROM (Electrical Erasable Programmable ROM).

The turning machine 300 may also comprise a control section 360, schematically illustrated in fig. 3. For a computer numerical control (CNC) turning machine, the control section may for example comprise a programmable logic controller (PLC) and/or a numerical control (NC). The machine control section 360 may be communicatively coupled to the processor 310, for example via the communication interface 340, and adapted to receive signals therefrom, for example an estimated radius deviation or a control instruction determined based on such deviation. As discussed, the processor 310 is not necessarily an integral part of the turning machine, but could be a separate unit, attached to the turning machine or remotely located.

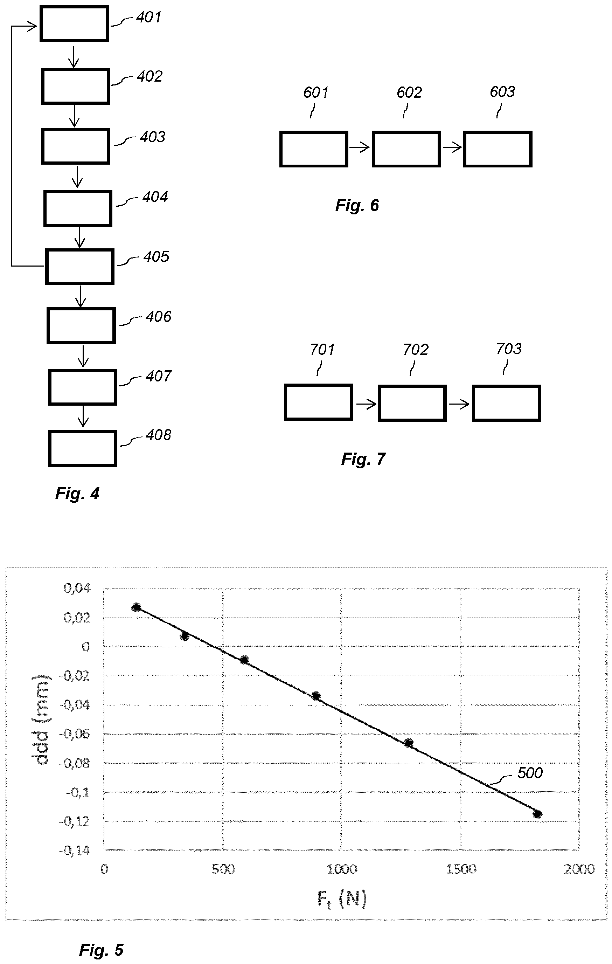

Fig. 4 is a flowchart illustrating a method for calibrating a cutting tool. In steps 401-405, a calibration operation is performed.

In step 401, an inner surface of a calibration hole in a workpiece is machined in accordance with a target radius, e.g. as programmed in the CNC. This target radius thus corresponds to a certain cutting depth.

In step 402, a value of a first parameter that is dependent on the tangential cutting force and a value of a second parameter that is dependent on the radial cutting force occurring during the machining are determined. The parameters may be strain, force or deflection in the radial and tangential directions, and they may be measured directly by sensors arranged at the cutting tool, or determined using such sensor signals.

Thereafter, in step 403, the actual radius of the hole is measured.

In step 404, a radius deviation value is calculated as the difference between the target radius and the actual radius.

In step 405, a data point is defined by associating the first and second parameter values to the radius deviation value.

The calibration operation steps 401-405 may be repeated to define further data points. Different feed is preferably used in step 401 of different calibration operations and/or the target radius is selected in such way that the cutting depth is different in different calibration operations. Thereby, the data points acquired will be based on different tangential and radial cutting forces. The same calibration hole may be machined in the different calibration operations (with the target radius modified accordingly, based on the radius of the hole resulting from the previous calibration operation). Alternatively, different calibration holes in the workpiece, or calibration holes in other workpieces of the same material, may be machined in different calibration operations.

In step 406, a curve fitting algorithm is applied to the data points obtained in the one or more calibration operations, such that a dependence between radius deviation and the first and second parameters is defined.

In step 407, a first calibration coefficient is determined from the dependence. The first calibration coefficient is indicative of how a tangential cutting force affects a radius of a hole machined in the material by the cutting tool arranged to the turning machine, and corresponds to a proportionality constant defining a linear dependence between the first parameter and the radius deviation.

In step 408, the first calibration coefficient is stored.

According to an embodiment, the curve fitting is based on multiple linear regression wherein the first and second parameters are strain in directions that correspond, or substantially correspond, to the tangential and radial directions, respectively. As long as the strain gauges are fixed (i.e. non-movably arranged) with respect to the tool bar, the calibration will provide calibration coefficients that are usable for estimating radius deviations when machining with the cutting tool even if the strain gauges would be somewhat misaligned with respect to the radial and tangential directions.

The radius deviation $\Delta R$ may be given by a linear combination of the tangential strain St and the radial strain $S_r$:

$$\Delta R = x_{off} + k_1 S_t + k_2 S_r$$

wherein the coefficient $k_1$ for the tangential strain St is the proportionality constant reflecting the linear dependence between radius deviation and tangential strain that is to be determined by the calibration method (i.e. corresponding to the first calibration coefficient). The coefficient $k_2$ for the radial strain $S_r$ is a proportionality constant that reflects the linear dependence between radius deviation and radial strain. The constant $x_{off}$ refers to a machine offset error in the radial direction, i.e. an offset error between the position indicated by the machine and the true position of the cutting tool. Such error may have several causes, for instance an imperfect touch procedure or an offset error in the machine's built-in probe used when setting up the turning system.

The coefficients $k_1$ and $k_2$ and the offset error $x_{off}$ are found by a procedure that preferably involves a plurality of calibration operations including test cuts with different feed and cutting depth in order to cover a large range of cutting forces. By measuring the diameter and determining the true radius for each cut, and comparing with the measured strain signals, the best "least squares" approximation for the three unknowns may be found using multiple linear regression.

Finding the best linear approximation by multiple linear regression may be described in matrix form, according to which, with *n* measurements, the equations can be written:

$$\begin{pmatrix} 1 & S_{t1} & S_{r1} \\ 1 & S_{t2} & S_{r2} \\ \vdots & \vdots & \vdots \\ 1 & S_{tn} & S_{rn} \end{pmatrix} \begin{pmatrix} x_{off} \\ k_1 \\ k_2 \end{pmatrix} = \begin{pmatrix} \Delta R_1 \\ \Delta R_2 \\ \vdots \\ \Delta R_n \end{pmatrix}$$

Using matrix and vector notation we get:

$$\mathbf{Ak} = \mathbf{f}$$

$$\mathbf{A}^T \mathbf{Ak} = \mathbf{A}^T \mathbf{f}$$

$$\mathbf{k} = \left( \mathbf{A}^T \mathbf{A} \right)^{-1} \mathbf{A}^T \mathbf{f}$$

Here $\mathbf{k}$ is a vector containing our least squares estimates of the proportionality constants.

This can be solved by any suitable algorithm for matrix inversion, such as, for example, an algorithm based on Cholesky decomposition. In a calibration example including five test cuts (see table 1), $k_i$, $k_2$ and $x_{off}$ were found by least squares multiple linear regression as described above, using the **mldivide** function in Matlab®.

Table 1.

| $a_{p\_nom}$ | $f_n$ | $\varnothing_{nom}$ | $\varnothing_{act}$ | $S_r$ | $S_t$ | $\Delta R_{act}$ | $\Delta R_{calc}$ |
|---|---|---|---|---|---|---|---|
| mm | mm/rev | mm | mm | | | mm | mm |
| 3 | 0,3 | 109,90 | 109,60 | 63000 | 399000 | 0,150 | 0,152 |
| 2 | 0,24 | 113,60 | 113,30 | 49400 | 206700 | 0,150 | 0,145 |
| 1 | 0,16 | 115,30 | 115,05 | 37000 | 78000 | 0,125 | 0,128 |
| 0,5 | 0,16 | 116,05 | 115,85 | 28000 | 39000 | 0,100 | 0,105 |
| 0,5 | 0,12 | 116,85 | 116,65 | 25000 | 33000 | 0,100 | 0,095 |

The cuts were made with a 720 mm long tool with a 60 mm diameter. In table 1, $a_{p\_nom}$ is the cutting depth, $f_n$ is the feed and $\varnothing_{nom}$ is the target diameter. $\varnothing_{act}$ is the actual diameter and $\Delta R_{act}$ is the radius deviation (i.e. $\frac{\varnothing_{nom} - \varnothing_{act}}{2}$).

The multiple linear regression analysis then resulted in:

$$k_1 = -1.96 \cdot 10^{-6}$$

$$k_2 = 4.84 \cdot 10^{-5}$$

$$x_{off} = 0.0168$$

In table 1, the estimated radius deviation $\Delta R_{calc}$ for the five cuts, calculated using these values for $k_1$, $k_2$ and $x_{off}$, is indicated.

According to another embodiment, the analysis is based on a method wherein each second parameter value is first subtracted from the corresponding radius deviation value, and then a data point is defined by associating the resulting value with the value of the first parameter. In this embodiment, the first parameter is cutting force in the tangential direction, whereas the second parameter is deflection in the radial direction. Thus, for each calibration operation, the deflection in the radial direction is subtracted from the radius deviation such that a deflection-deviation difference value is obtained, which is associated to the value of the cutting force in the tangential direction, thus defining a data point.

If based on strain, for example measured by strain gauges as described above, cutting forces in the respective tangential and radial directions may be determined by using the results of a pre-calibration in which a known force has been applied to the tool bar and the corresponding output from the strain gauges is identified, thus providing a relation between force and measured strain. Hence, a pre-calibration coefficient defining the relation between tangential strain and tangential force may be determined by dividing the measured tangential strain by the known applied tangential force. This pre-calibration coefficient may then be used to determine tangential cutting force, i.e. by dividing a measured tangential strain by the pre-calibration coefficient.

In a corresponding way, the relation between strain and deflection may be determined in a pre-calibration procedure by deflection loading the tool against the workpiece to a known deflection. Thereby, a second calibration coefficient defining the relation between radial strain and radial deflection is found by dividing the measured radial strain by the known radial deflection. Accordingly, the radial deflection, i.e. the second parameter value, may be determined from the strain signal by dividing the measured radial strain by the second calibration coefficient. The second calibration coefficient may be employed both in the calibration method, i.e. for determining the radial deflection during a calibration operation, and in subsequent procedures for estimating a radius deviation. The second calibration coefficient and the pre-calibration coefficient may be stored on, and retrieved from, a storage medium such as the memory 160.

Thus, each data point will be defined as the value of the tangential cutting force associated to the value of the deflection-deviation difference. According to this embodiment, the curve fitting algorithm will be simple linear regression using least squares resulting in a linear fit defining the deflection-deviation difference as a function of the cutting force in the tangential direction. This linear fit defines the dependence between the radius deviation and the first and second parameters.

Table 2 shows the results of six different calibration operations using different cutting data, wherein $a_{p\_nom}$ is the cutting depth, $f_n$ is the feed and $\varnothing_{nom}$ is the target diameter. $\varnothing_{act}$ is the actual diameter and $\Delta R_{act}$ is the radius deviation (i.e. $\frac{\varnothing_{nom} - \varnothing_{act}}{2}$ ). The radial force $F_r$, the tangential force Ft and the radial deflection $\delta_r$ were calculated based on strain gauge measurements as described above. The deflection-deviation difference (ddd) is indicated in the table and corresponds to the difference between the radius deviation $\Delta R_{act}$ and the radial deflection $\delta_r$.

Table 2.

| $a_{p\_nom}$ | $f_n$ | $F_r$ | $F_t$ | $\varnothing_{nom}$ | $\varnothing_{act}$ | $\Delta R_{act}$ | $\delta_r$ | ddd |
|---|---|---|---|---|---|---|---|---|
| mm | mm/rev | N | N | mm | mm | mm | mm | mm |
| 3 | 0,32 | 367 | 1823 | 109,810 | 109,470 | 0,170 | 0,285 | -0,115 |
| 2,5 | 0,28 | 304 | 1281 | 114,470 | 114,130 | 0,170 | 0,236 | -0,066 |
| 2 | 0,24 | 263 | 890 | 118,130 | 117,790 | 0,170 | 0,204 | -0,034 |
| 1,5 | 0,2 | 224 | 591 | 120,790 | 120,460 | 0,165 | 0,174 | -0,009 |
| 1 | 0,16 | 187 | 339 | 122,460 | 122,155 | 0,152 | 0,145 | 0,007 |
| 0,5 | 0,12 | 126 | 137 | 123,155 | 122,905 | 0,125 | 0,098 | 0,027 |

Fig. 5 shows the data points and a corresponding linear fit 500 defining the dependence between radius deviation $\Delta R_{act}$, radial deflection $\delta_r$ and tangential cutting force $F_t$. The first calibration coefficient is determined as the slope of the linear fit, which in this example is found to be approximately -0,083 mm/kN.

As also seen in figure 5, the linear fit intercepts the deflection-deviation difference axis at 0.04 mm. This corresponds to a machine offset error $x_{offset}$ and should be compensated for when machining.

Fig. 6 is a flow-chart illustrating a method for estimating the radius deviation of hole machined in a workpiece.

In step 601, a first calibration coefficient for the cutting tool arranged to the turning machine for machining in the material is obtained, wherein the first calibration coefficient has been determined by a calibration method according to the above.

In step 602, taking place after or during machining the hole, values of the same first and second parameters that were considered in the calibration method are determined.

In step 603, the radius deviation is estimated as a linear combination of at least the first and the second parameter values, using the first calibration coefficient as coefficient for the first parameter value.

According to some embodiments, the second parameter value may refer to radial deflection and the first parameter value may refer to tangential cutting force, in which case the estimated radius deviation $\Delta R_{est}$ is calculated as:

$$\Delta R_{est} = \delta_r + k_1 F_t$$

wherein $\delta_r$ is the radial deflection, $k_1$ is the first calibration coefficient, and $F_t$ is the tangential cutting force.

On the other hand, if the radius deviation is estimated by a polynomial of higher degree, for example a second degree polynomial, i.e. such that

$$\Delta R_{est} = \delta_r + k_1 F_t + k_2 F_t{}^2$$

further calibration coefficients ($k_2$ in this case) may have to be determined in the calibration method and employed accordingly when estimating the radius deviation.

Fig. 7 is a flow-chart illustrating a method for compensating an estimated deviation using a turning system described with reference to fig. 3.

In step 701, a deviation, from a desired radius, of a machined radius of a hole in a workpiece is determined by a method as described above with reference to fig. 6.

In step 702, the estimated deviation is transmitted to the control section of the turning machine.

In step 703, the estimated deviation is compensated by offsetting, via the control section, the cutting tool along a radial direction relative to the hole, by a distance corresponding to the estimated deviation.

If the deviation is determined in real-time, i.e. during machining, it may be possible to also compensate for the deviation on the fly when machining using this method.

**Claims**

1.  A method for calibrating a cutting tool arranged to a turning machine for machining the inner surface of a hole in a workpiece of a material, wherein, during machining, the workpiece is subjected to a radial cutting force and a tangential cutting force directed in a radial direction and a tangential direction, respectively, relative to the hole, resulting in radial deflection of the cutting tool in the radial direction and tangential deflection of the cutting tool in the tangential direction, and wherein the method comprises:

    - performing one or more calibration operations with respect to a workpiece of the material, wherein each calibration operation comprises the steps of:

        - machining an inner surface of a calibration hole in the workpiece in accordance with a target radius;
        - determining a value of a first parameter that is dependent on the tangential cutting force and a value of a second parameter that is dependent on the radial cutting force occurring during the machining;
        - after machining the inner surface of the calibration hole, measuring the actual radius thereof;
        - determining a radius deviation value as the difference between the target radius and the actual radius;
        - defining a data point by associating the first and second parameter values to the radius deviation value,

    - applying a curve fitting algorithm to the data points obtained in the one or more calibration operations, such that a dependence between radius deviation and the first and second parameters is defined,
    - determining, from the dependence, a first calibration coefficient indicative of how a tangential cutting force affects a radius of a hole machined in the material by the cutting tool arranged to the turning machine, wherein the first calibration coefficient corresponds to a proportionality constant defining a linear dependence between the first parameter and the radius deviation, and
    - storing the first calibration coefficient.

2.  A method according to claim 1, wherein the second parameter is radial deflection of the cutting tool, and wherein the step of associating the first and second parameter values to the radius deviation value comprises:

    - determining a deflection-deviation difference value as the difference between the radial deflection of the cutting tool and the radius deviation value, and
    - associating the deflection-deviation difference value to the value of the first parameter,

    such that, by applying the curve fitting algorithm, the deflection-deviation difference is modelled as a function of the first parameter, thereby defining the dependence between radius deviation and the first and second parameters, wherein the first calibration coefficient corresponds to an approximated linear rate of change of the first parameter with respect to deflection-deviation difference.

3.  A method according to claim 2, further comprising the steps of:

    - determining, from the dependence, a machine offset error as the deflection-deviation difference value when the value of the first parameter is zero; and

- storing the machine offset error.

4. A method according to any of the claims 2-3, further comprising the steps of:

   - determining a second calibration coefficient for the cutting tool arranged to the turning machine for machining in the material by:

      - pressing the cutting tool in the radial direction against the surface of the workpiece for deflecting the cutting tool a known distance in the radial direction,
      - detecting radial strain in the radial direction, or a direction substantially corresponding to the radial direction, that is caused by the deflection,
      - determining the second calibration coefficient as the detected radial strain divided by the deflected distance; and

   - storing the second calibration coefficient.

5. A method according to claim 4, wherein the steps for determining the second calibration coefficient are carried out before performing the one or more calibration operations, and wherein, for each calibration operation, radial strain occurring during the machining is detected and the radial deflection of the cutting tool is determined as the ratio between the detected radial strain and the second calibration coefficient.

6. A method according to any of the claims 1-5, wherein the curve fitting is based on the results of at least three calibration operations using different cutting data when machining an inner surface of a calibration hole in the workpiece.

7. A method according to any of the claims 1-6, wherein the first parameter is tangential cutting force.

8. A method according to claim 7, wherein the tangential cutting force is determined based on measured strain.

9. A method for estimating a deviation, from a desired radius, of a machined radius of a hole in a workpiece of a material, machined by a cutting tool arranged to a turning machine, wherein the method comprises:

   - obtaining a first calibration coefficient for the cutting tool arranged to the turning machine for machining in the material, determined by a calibration method according to any of the claims 1-8, and,

   after or during machining the hole,

   - determining a value of the same first parameter considered in the calibration method,
   - determining a value of the same second parameter considered in the calibration method, and
   - estimating the deviation as a linear combination of at least the first and the second parameter values using the first calibration coefficient as coefficient for the first parameter value.

10. A method according to claim 9, wherein the second parameter is radial deflection of the cutting tool, and the method comprises the further step of:

    - obtaining a second calibration coefficient for the cutting tool arranged to the turning machine for machining in the material, determined by a calibration method according to claim 4,

    and wherein the step of determining the value of the second parameter comprises:

       - detecting radial strain in a radial direction, or a direction substantially corresponding to a radial direction, relative to the hole, and
       - determining the value of the second parameter as a ratio between the detected radial strain and the second calibration coefficient.

11. Method for compensating an estimated deviation in the radius of a hole machined in a workpiece of a material with a cutting tool arranged to a turning machine, the method comprising:

- estimating a deviation, from a desired radius, of a machined radius of the hole by a method according to any of the claims 9-10,
- transmitting the estimated deviation to a control section of the turning machine,
- compensating the estimated deviation by offsetting, via the control section, the cutting tool along a radial direction relative to the hole, by a distance corresponding to the estimated deviation.

12. A cutting tool for use in a method according to any of the claims 9-11, wherein the cutting tool is arrangeable to a turning machine for machining a workpiece of a material, and comprises a memory having stored thereon a first calibration coefficient for the cutting tool arranged to the turning machine for machining in the material, wherein the first calibration coefficient has been determined by a calibration method according to any of the claims 1-8.

13. A turning system comprising

- a turning machine including a control section,
- a cutting tool arranged to the turning machine,
- one or more sensors,
- a memory having stored thereon a first calibration coefficient for the cutting tool arranged to the turning machine for machining in a material, determined by a calibration method according to any of the claims 1-8, and
- a processor,

and being configured to perform the method according to any of the claims 9-11.

14. Computer program having instructions which when executed by the system according to claim 13 causes the system to perform the method according to any of the claims 9-11.

**Fig. 1**

**Fig. 2**

**Fig. 3**

Fig. 4

Fig. 6

Fig. 7

Fig. 5

Europäisches
Patentamt

European
Patent Office

Office européen
des brevets

# EUROPEAN SEARCH REPORT

Application Number

EP 20 21 3849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br>A | EP 3 292 930 A1 (SANDVIK INTELLECTUAL PROPERTY [SE]) 14 March 2018 (2018-03-14)<br>* abstract *<br>* paragraph [0018] *<br>* paragraph [0113] *<br>----- | 1,6-11, 13,14<br>2-5 | INV.<br>B23B25/06<br>B23B29/02<br>B23Q17/12<br>G05B19/404 |
| X | US 9 751 180 B2 (CENTRE TECHNIQUE DE L'INDUSTRIE DU DECOLLETAGE [FR]) 5 September 2017 (2017-09-05)<br>* column 2, lines 15-27 *<br>* column 7, lines 55-64 *<br>----- | 9 | |
| X | US 2009/175694 A1 (CRAIG KAREN ANNE [US] ET AL) 9 July 2009 (2009-07-09)<br>* paragraphs [0005], [0009] *<br>* abstract *<br>----- | 12 | |
| A | US 2014/256228 A1 (KAMINSKI JACEK [SE] ET AL) 11 September 2014 (2014-09-11)<br>* paragraph [0060] *<br>* paragraph [0059]; figure 3 *<br>----- | 1,12-14 | |
| A | GB 2 207 371 A (NICKOLS FRANCIS MALCOLM JOHN) 1 February 1989 (1989-02-01)<br>* figure 2 *<br>* page 7, lines 4-10 *<br>----- | 1,2 | TECHNICAL FIELDS SEARCHED (IPC)<br><br>B23B<br>B23G<br>B23Q<br>G05B |

The present search report has been drawn up for all claims

| Place of search | Date of completion of the search | Examiner |
|---|---|---|
| The Hague | 4 June 2021 | Jaeger, Hein |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 3849

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2021

| Patent document cited in search report | | Publication date | Patent family member(s) | | Publication date |
|---|---|---|---|---|---|
| EP 3292930 | A1 | 14-03-2018 | CA | 3035279 A1 | 15-03-2018 |
| | | | CN | 109715321 A | 03-05-2019 |
| | | | EP | 3292930 A1 | 14-03-2018 |
| | | | JP | 2019534795 A | 05-12-2019 |
| | | | RU | 2019110261 A | 09-10-2020 |
| | | | US | 2019232377 A1 | 01-08-2019 |
| | | | WO | 2018046304 A1 | 15-03-2018 |
| US 9751180 | B2 | 05-09-2017 | EP | 2978565 A1 | 03-02-2016 |
| | | | FR | 3003486 A1 | 26-09-2014 |
| | | | US | 2016045994 A1 | 18-02-2016 |
| | | | WO | 2014154593 A1 | 02-10-2014 |
| US 2009175694 | A1 | 09-07-2009 | BR | PI0819394 A2 | 22-04-2015 |
| | | | CA | 2705469 A1 | 18-06-2009 |
| | | | CN | 101896313 A | 24-11-2010 |
| | | | EP | 2222436 A2 | 01-09-2010 |
| | | | JP | 2011518045 A | 23-06-2011 |
| | | | KR | 20100100955 A | 15-09-2010 |
| | | | RU | 2010128616 A | 27-01-2012 |
| | | | US | 2009175694 A1 | 09-07-2009 |
| | | | WO | 2009076496 A2 | 18-06-2009 |
| US 2014256228 | A1 | 11-09-2014 | CN | 104039502 A | 10-09-2014 |
| | | | EP | 2760630 A1 | 06-08-2014 |
| | | | JP | 2014531332 A | 27-11-2014 |
| | | | US | 2014256228 A1 | 11-09-2014 |
| | | | WO | 2013043102 A1 | 28-03-2013 |
| GB 2207371 | A | 01-02-1989 | EP | 0371062 A1 | 06-06-1990 |
| | | | EP | 0376965 A1 | 11-07-1990 |
| | | | GB | 2207371 A | 01-02-1989 |
| | | | GB | 2207623 A | 08-02-1989 |
| | | | JP | H03500744 A | 21-02-1991 |
| | | | JP | H03500745 A | 21-02-1991 |
| | | | US | 5035554 A | 30-07-1991 |
| | | | WO | 8901192 A1 | 09-02-1989 |
| | | | WO | 8901193 A1 | 09-02-1989 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3292930 A